# EUROPÄISCHE PATENTANMELDUNG

(11) **EP 0 987 150 A2**
(43) Veröffentlichungstag der Anmeldung: **22.03.2000**
(21) Anmeldenummer: 99117949.0
(22) Anmeldetag: 15.09.1999
(51) Int. Cl.: B60R 21/20

(54) **Airbag-Modul für Kraftfahrzeuglenkräder**

(30) Priorität: 15.09.1998 DE 29816568 U
(71) Anmelder: TRW Automotive Safety Systems GmbH & Co. KG, 63743 Aschaffenburg (DE)
(72) Erfinder: Derrick, John-Oliver, 97265 Hettstadt (DE)
(74) Vertreter: Degwert, Hartmut, Dipl.-Phys.

(57) **Zusammenfassung**

Vorgeschlagen wird ein Airbag-Modul für die Anordnung in Kraftfahrzeuglenkrädern mit einem topfförmigen Generatorträger und einer deckelförmigen Abdeckkappe, wobei Generatorträger und Abdeckkappe randseitig miteinander verbunden sind und einen Aufnahmeraum für den Luftsack bilden.

Das Airbag-Modul ist erfindungsgemäß dadurch gekennzeichnet, daß Generatorträger (1) und Abdeckkappe (2) wenigstens je einen im wesentlichen parallel zur Lenkradachse (3) ausgerichteten Wandbereich (4, 5) aufweisen, die konzentrisch aneinander anliegen und durch Kleben miteinander verbunden sind.

Einer der Wandbereiche (4, 5) weist vorzugsweise einen nutförmigen Querschnitt auf, in den der andere Wandbereich (5, 4) einsteckbar ist. Bei der Fertigung kann eine abgemessene Klebstoffmenge im Nutgrund angeordnet und durch Einstecken des Gegenwandbereiches im Wege der Verdrängung über die Klebeflächen verteilt werden.

## Beschreibung

Die Erfindung betrifft ein Airbag-Modul für die Anordnung in Kraftfahrzeuglenkrädern mit einem topfförmigen Generatorträger und einer deckelförmigen Abdeckkappe, wobei Generatorträger und Abdeckkappe randseitig miteinander verbunden sind und einen Aufnahmeraum für den Luftsack bilden.

Bei derartigen Airbag-Modulen dient der Generatorträger zur Befestigung des Moduls im Lenkrad, während die Abdeckkappe den fahrerseitigen Verschluß des Aufnahmeraumes für den zusammengefalteten Luftsack bildet. Beim explosionsartigen Aufblasen des Luftsacks reißt die Abdeckkappe längs vorgegebener Sollbruchlinien auf und gibt den Austrittsquerschnitt für den Luftsack frei, indem sie ein- oder zweiteilig scharnierartig aufklappt. Bei der Aktivierung eines Luftsacks treten kurzzeitig sehr hohe Kräfte auf, die bei der Befestigung des Luftsacks im Airbag-Modul und der Befestigung des Generatorträgers im Lenkrad berücksichtigt werden müssen. Ähnlich hohe Kräfte treten auch in der Verbindung zwischen Abdeckkappe und Generatorträger auf, die daher ebenfalls festigkeitsmäßig entsprechend ausgelegt werden muß. Ferner sind bei der Gestaltung dieser Verbindung die räumlich begrenzten Einbauverhältnisse sowie die Möglichkeit einer rationellen Serienfertigung zu beachten.

Bisher sind für die Verbindung zwischen Abdeckkappe und Generatorträger verschiedene Schraub-, oder Clipverbindungen vorgeschlagen worden, die sich zwar bewährt haben, bei denen jedoch an den Verbindungsstellen örtlich begrenzt sehr hohe Belastungen auftreten, wenn der Airbag ausgelöst wird. Außerdem sind die bekannten Verbindungen z.T. herstellungstechnisch sehr aufwendig oder aber für eine Verkürzung der Taktzeiten bei der Endmontage nicht geeignet.

Der Erfindung liegt die Aufgabe zugrunde, bei einem Airbag-Modul der eingangs genannten Art eine Verbesserung der Verbindung zwischen Abdeckkappe und Generatorträger vorzuschlagen, bei der die vorgenannten Nachteile vermieden werden können. Insbesondere soll eine rationellere Vormontage der Airbag-Module erreicht werden können, ohne daß irgendwelche funktionellen oder konstruktiven Nachteile in Kauf genommen werden müssen.

Zur Lösung dieser Aufgabe wird erfindungsgemäß vorgeschlagen, daß Generatorträger und Abdeckkappe wenigstens je einen im wesentlichen parallel zur Lenkradachse ausgerichteten Wandbereich aufweisen, die konzentrisch aneinander anliegen und durch Kleben miteinander verbunden sind.

Versuche haben überraschenderweise gezeigt, daß bei allen vorkommenden Anwendungsfällen am Generatorträger und an der Abdeckkappe genügend große, korrespondierende Wandbereiche vorgesehen werden können, um die festigkeitsmäßig erforderliche Klebefläche zu realisieren, so daß weitere Maßnahmen nicht erforderlich sind, um die Abdeckkappe sicher am Generatorträger befestigen zu können.

Vorteilhafte Ausgestaltungen des Erfindungsgedankens sind in den Unteransprüchen 2 bis 10 beschrieben. Weitere Einzelheiten werden anhand der in den Figuren 1 bis 5 dargestellten Ausführungsbeispiele näher erläutert. Es zeigen:
Fig. 1 einen Teilschnitt durch eine erste Ausführungsform der Erfindung;
Fig. 2 einen Teilschnitt durch eine zweite Ausführungsform;
Fig. 3 einen Teilschnitt durch eine dritte Ausführungsform;
Fig. 4 einen Teilschnitt durch eine weitere Ausführungsform; und
Fig. 5 eine Einzelansicht aus Fig. 4 im Schnitt.

Bei allen Ausführungsformen sind der Generatorträger mit 1, die Abdeckkappe mit 2, die Lenkradachse mit 3, der Wandbereich des Generatorträgers 1 mit 4 und der Wandbereich der Abdeckkappe 2 mit 5 bezeichnet.

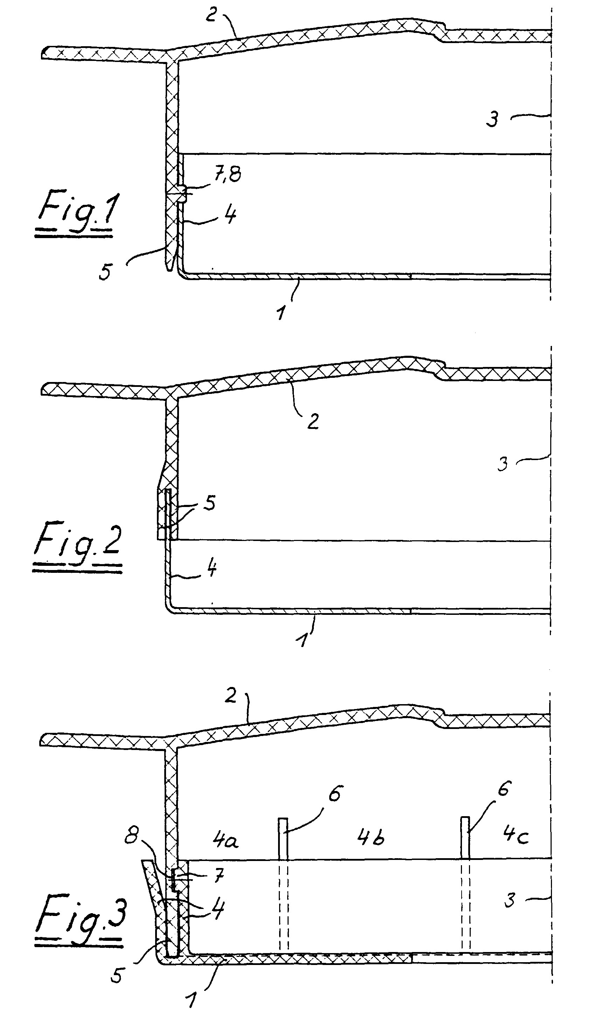

Bei den Ausführungsformen der Figuren 1, 2 und 4 besteht der Generatorträger 1 aus einem durch Tiefziehen oder dergl. umgeformten Blechabschnitt, dessen Wandbereich 4 parallel zur Lenkradachse 3 ausgerichtet ist. Die Grundform des Generatorträgers ist häufig kreisförmig, kann im Prinzip aber an unterschiedliche Einbauverhältnisse im Lenkrad angepaßt werden, wobei es zur Realisierung des Erfindungsgedankens nur darauf ankommt, daß zumindest ein Wandbereich 4 vorhanden ist, der an einem korrespondierenden Wandbereich 5 der Abdeckkappe 2 anliegt, so daß eine Verbindung der beiden Wandbereiche 4, 5 durch Kleben möglich ist.

Bei der Ausführungsform gemäß Fig. 1 übergreift der Wandbereich 5 der Abdeckkappe 2 den Wandbereich 4 des Generatorträgers 1, wodurch konzentrisch aneinander anliegende Wandbereiche geschaffen werden, die sich über fast die gesamte Höhe der Wandung des Generatorträgers 1 erstrecken, so daß stets eine ausreichend große Klebefläche realisiert werden kann. Der Wandbereich 5 der Abdeckkappe 1 weist unten eine konische Erweiterung auf, wodurch das Aufstecken auf den Wandbereich 4 des Generatorträgers 1 erleichtert wird. Außerdem ist am Wandbereich 5 der Abdeckkappe 1 noch ein Vorsprung 7 realisiert, der in eine Ausnehmung 8 des Generatorträgers 1 eingreift, wodurch zusätzlich eine formschlüssige Verbindungskomponente geschaffen ist, die festigkeitsmäßig zwar nicht unbedingt erforderlich ist, bei kreisrunden Grundformen aber die richtige gegenseitige Positionierung der Wandbereiche 4 und 5 zueinander erleichtert.

Bei der Ausführungsform gemäß Fig. 2 ist der an der Klebeverbindung beteiligte Wandbereich 5 der Abdeckkappe 2 doppelwandig, d.h. mit einem nutförmigen Querschnitt ausgebildet, in den der Wandbereich 4 des Generatorträgers 1 einsteckbar ist. Bei derartigen Ausführungsformen kann die benötigte Klebstoffmenge in den Grund des nutförmigen Querschnitts eingebracht und durch Einstecken des Wandbereiches 4 des Generatorträgers im Wege der Verdrängung über die gesamte vorgesehene Klebefläche verteilt werden.

Dieser Aspekt ist insbesondere für die automatische Serienfertigung von Bedeutung, weil lediglich die erforderliche Klebstoffmenge abgemessen und eingebracht werden muß, ohne daß zusätzlich ein Schritt zur Verteilung des Klebstoffs auf die Klebfläche erforderlich ist.

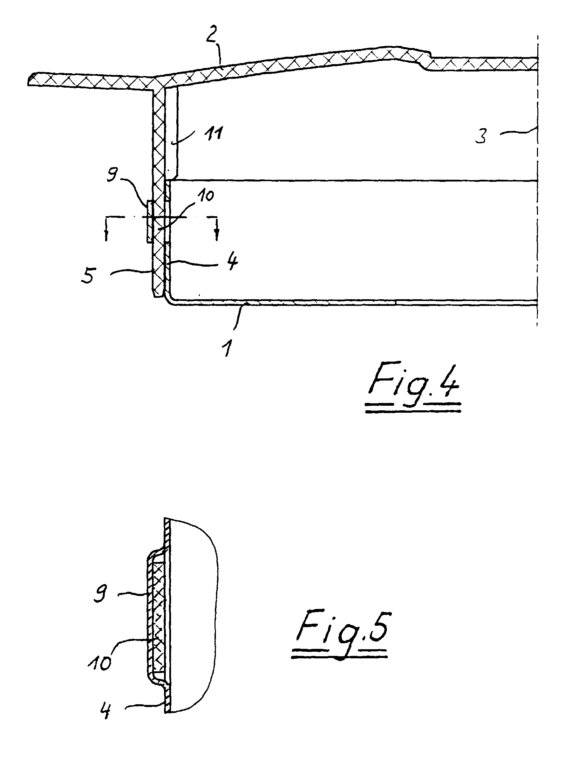

Bei der Ausführungsform gemäß Fig. 3 ist auch der Generatorträger 1 aus Kunststoff gefertigt und mit einem doppelwandigen Wandbereich 4 ausgestattet, in dessen nutförmigen Querschnitt der Wandbereich 5 der Abdeckkappe 2 einsteckbar ist. Der äußere Teil des Wandbereiches 4 ist trichterförmig erweitert, wodurch das Einstecken des Wandbereiches 5 erleichtert wird. Die Wandbereiche 4 und 5 sind wie beim Ausführungsbeispiel gemäß Fig. 1 mit sich radial zur Lenkradachse 3 erstreckenden, ineinandergreifenden Ausformungen 7, 8 ausgestattet, die eine zusätzliche, formschlüssige Verbindungskomponente bilden, insbesondere aber zur gegenseitigen Positionierung von Generatorträger 1 und Abdeckkappe 2 herangezogen werden können. Im Wandbereich 5 der Abdeckkappe 2 sind parallel zur Lenkradachse 3 verlaufende Schlitze 6 vorgesehen, wodurch der Wandbereich 5 in mehrere Abschnitte 4a, 4b, 4c unterteilt ist. Eine derartige Maßnahme, die analog auch beim Wandbereich 4 des Generatorträgers vorgenommen werden kann, empfiehlt sich, wenn die Wandbereiche nicht ausreichend elastisch verformbar sind, so daß sie sich - wenn sich radial zur Lenkradachse 3 erstreckende Ausformungen 7, 8 vorgesehen sind - bei der Montage nicht oder nur mit unvertretbar hohem Kraftaufwand übereinander schieben lassen. Außerdem können derartige Schlitze bei der Herstellung der Wandbereiche hilfreich sein, weil dadurch das Entformen und/oder die Gestaltung der Gießform vereinfacht werden kann.

Bei der Ausführungsform gemäß Fig. 4 sind im Wandbereich 4 des Generatorträgers 1 nach außen ausgestellte Taschen 9 ausgebildet, in die Abschnitte 10 des Wandbereiches 5 der Abdeckkappe 2 einsteckbar sind. Fig. 5 zeigt, daß die Tasche 9 einstückig und durchgehend mit dem Wandbereich 4 ausgebildet ist. Der Abschnitt 10 liegt innen am Wandbereich 4 und außen an der Tasche 9 an. An der Abdeckkappe 2 können Stege 11 ausgebildet sein, die sich auf dem oberen Rand des Wandbereiches 4 des Generatorträgers 1 abstützen und damit für die richtige Positionierung von Generatorträger 1 und Abdeckkappe 2 in Richtung der Lenkradachse 3 sorgen. Die Taschen 9 müssen nicht unbedingt durchgehend ausgeführt werden, sie können auch aus zwei entsprechend abgewinkelten Teilen bestehen, deren Enden beabstandet zueinander liegen, falls das Material des Wandbereiches 4 für eine durchgehende Gestaltung der Tasche 9 nicht ausreicht oder falls dadurch die Herstellung der Tasche 9 erleichtert werden kann.

## Patentansprüche

1. Airbag-Modul für die Anordnung in Kraftfahrzeuglenkrädern mit einem topfförmigen Generatorträger und einer deckelförmigen Abdeckkappe, wobei Generatorträger und Abdeckkappe randseitig miteinander verbunden sind und einen Aufnahmeraum für den Luftsack bilden, dadurch gekennzeichnet, daß Generatorträger (1) und Abdeckkappe (2) wenigstens je einen im wesentlichen parallel zur Lenkradachse (3) ausgerichteten Wandbereich (4, 5) aufweisen, die konzentrisch aneinander anliegen und durch Kleben miteinander verbunden sind.

2. Airbag-Modul nach Anspruch 1, dadurch gekennzeichnet, daß einer der Wandbereiche (4, 5) einen nutförmigen Querschnitt aufweist, in den der andere Wandbereich (5, 4) einsteckbar ist.

3. Airbag-Modul nach Anspruch 1 oder 2, dadurch gekennzeichnet, daß der Wandbereich (4, 5) am Generatorträger (1) oder an der Abdeckkappe (2) ringförmig umlaufend ausgebildet ist.

4. Airbag-Modul nach Anspruch 3, dadurch gekennzeichnet, daß ein ringförmig umlaufender Wandbereich (4, 5) durch Längsschlitze (6) in zwei oder mehr Abschnitte (4a, 4b, 4c) unterteilt ist.

5. Airbag-Modul nach einem der Ansprüche 1 bis 4, dadurch gekennzeichnet, daß die konzentrisch aneinander anliegenden Wandbereiche (4, 5) je wenigstens eine sich radial zur Lenkradachse (3) erstreckende, ineinandergreifende Ausformung (7, 8) aufweisen, die in Richtung der Lenkradachse (3) eine zusätzliche, formschlüssige Verbindung bildet.

6. Airbag-Modul nach Anspruch 5, dadurch gekennzeichnet, daß die Ausformungen (7, 8) einen Querschnitt wie bei einer Nut- und Federverbindung haben.

7. Airbag-Modul nach einem der Ansprüche 1 bis 6, dadurch gekennzeichnet, daß der Generatorträger (1) in an sich bekannter Weise aus einem umgeformten Blechabschnitt besteht.

8. Airbag-Modul nach Anspruch 7, dadurch gekennzeichnet, daß im Wandbereich (4) des Generatorträgers (1) radial nach außen vorstehende Taschen (9) ausgebildet sind, in die Abschnitte (10) des Wandbereiches (5) der Abdeckkappe (2) einsteckbar sind.

9. Airbag-Modul nach Anspruch 8, dadurch gekennzeichnet, daß die Abdeckkappe (2) in an sich bekannter Weise aus Kunststoff besteht.

10. Airbag-Modul nach einem der Ansprüche 1 bis 6, dadurch gekennzeichnet, daß sowohl der Generatorträger (1) als auch die Abdeckkappe (2) aus Kunststoff bestehen.
